# EUROPEAN PATENT APPLICATION

(11) **EP 1 460 407 A1**
(43) Date of publication of application: **22.09.2004**
(21) Application number: 04075913.6
(22) Date of filing: 22.03.2004
(51) Int. Cl.: G01M 3/24, G01M 3/38

(54) **Method and apparatus for photo-acoustically detecting leaks**

(30) Priority: 21.03.2003 NL 1022994
(71) Applicant: Kema N.V., 6812 AR Arnhem (NL)
(72) Inventor: Rutgers, Wijnand Reijer, 6662 XD Overetuwe (Elst) (NL); Van Rijn, Theodorus Gerardus Maria, 6665 CR Overbetuwe (Driel) (NL); Van den Aardweg, Paul, 6828 HA Arnhem (NL)
(74) Representative: Eveleens Maarse, Pieter

(57) **Abstract**

The invention relates to an apparatus for detecting leaks in vessels inside which there prevails a pressure differing from ambient pressure, comprising a hand-operated directional microphone for detecting a sound generated in the case of a leak, and display means coupled to the directional microphone for displaying sound picked up by the directional microphone, wherein the directional microphone is coupled to a radiation energy source for supplying radiation energy to at least a part of the region from which the sounds are detected by the directional microphone, which radiation energy is suitable for increasing the kinetic energy of the gas escaping from the leak.

The invention also relates to a method for detecting leaks in vessels inside which there prevails a pressure differing from ambient pressure, wherein a user aims a directional microphone at a location of suspected leakage in the vessel and the sound picked up by the directional microphone is displayed, wherein a radiation energy source is aimed at the same location of suspected leakage for supplying thereto a radiation energy with properties for increasing the kinetic energy of the gas escaping from the leak.

## Description

It is known to trace leaks in vessels by making use of a directional microphone. A directional microphone is herein aimed with a very narrow directional beam at a position of suspected leakage on the vessel being inspected for leakage. Positions of suspected leakage are for instance seams between the diverse components of the vessel.

Use is made here of the phenomenon that a gas passing through a leak generates a hissing sound. In the case of very large leaks the hissing is so great that it is discernible by the human ear. With small leaks this is no longer the case; on the one hand because of the smaller amplitude of the hiss, and on the other because of the higher frequency band of a sound generated by a small leak. Using a microphone the sound can be picked up, amplified and detected, for instance after electronic processing through display thereof on a screen, or by storage thereof in a memory or on another storage medium. It is moreover possible to amplify the sound and modulate it to another frequency range such that it is discernible by the human ear.

Such leak detection apparatus and methods nevertheless lack sensitivity.

The object of the present invention is to provide such a method and apparatus wherein a greater sensitivity is obtained.

This object is achieved by the measures according to the claims. Use is made here of the phenomenon that feeding an energy beam to an escaping gas has the result - with an appropriate choice of the properties of the energy beam - that the kinetic energy of the escaping gas particles is increased. As a consequence the sound level generated by the escaping gas particles will be increased, so that it is more readily discernible by the directional microphone and the equipment coupled thereto.

It is pointed out here that, although the invention is by no means limited hereto, the invention is suitable for leak inspection of switches filled with SF6. The leak occurring here is extremely small but, due to regulations expected to come into effect in respect of maximum emission of SF6, it is important to measure very precisely the escape of SF6 due to leakage.

It is therefore attractive to make use of a radiation energy beam which has properties such that the kinetic energy of the escaping SF6 is greatly increased by absorption of said energy beam. Use is made here of the so-called photo-acoustic effect. This is the effect that absorption of radiation energy by gases takes place, whereby the kinetic energy of these gases increases. Use is furthermore made here of the fact that no SF6, or hardly any, is present in the environment, for instance in the outside air, so that apart from the escaping gas no other particles can be excited. This enables a particularly accurate detection.

While a leak detection apparatus is indeed also known from EP-A-0602119 which makes use of the same photo-acoustic phenomenon, here objects to be inspected for leakage in a production facility are filled with a tracer gas and then subjected one by one to a leakage inspection, wherein the whole object lies within the capture range of the directional microphone. The locating of a possible leak takes place only by having the radiation energy beam carry out a scanning movement over the product for inspecting.

The invention differs herefrom due to the fact that the radiation energy source is adapted to be moved simultaneously with the directional microphone, so that the region on which the radiation energy falls coincides as far as possible with the capture range of the directional microphone.

As a consequence of this measure the method and the apparatus become suitable to subject already installed devices, such as switches filled with SF6, to such a leakage inspection.

Another measure relates to the fact that use is made of a laser light energy beam. As a result of its natural properties, laser provides the option of exciting a directed beam that is very narrow. As a result of the desired absorption spectrum of the gas for detecting, use can herein be made of all known types of laser. In order to keep the apparatus easy to handle, it is however recommended to make use of simple lasers, such as semiconductor lasers or gas lasers.

In order to simplify the aiming at the same position of suspected leakage, use is preferably made of an apparatus wherein the directional microphone and the laser emission surface are placed in the same element to be operated by hand. There will of course then be a degree of parallax, but this can be compensated by suitable means.

As shown in the annexed figure, it is also possible to make use of a separate directional microphone and a separate laser beam. In the case in question, the laser beam source is incorporated in a camera. This camera otherwise plays no part in the present invention.

Another difference from the prior art lies in the fact that when SF6 switches are used no separate filling operation has to be carried out; SF6 switches are naturally filled with SF6. The purpose is precisely to prevent leakage of SF6 as far as possible by detecting leaks and repairing these leaks.

Another measure which greatly improves the sensitivity is the fact that use is made of a pulsed laser. The energy pulse is supplied to the escaping gas by applying a pulsed laser so that each time the escaping gas is struck by a laser pulse, an 'explosion' of the escaping gas takes place which results in a 'relative bang' which can be easily detected by the directional microphone.

Use is preferably made here of synchronization with filters behind the directional microphone and other electronic equipment to allow background sounds to be filtered out.

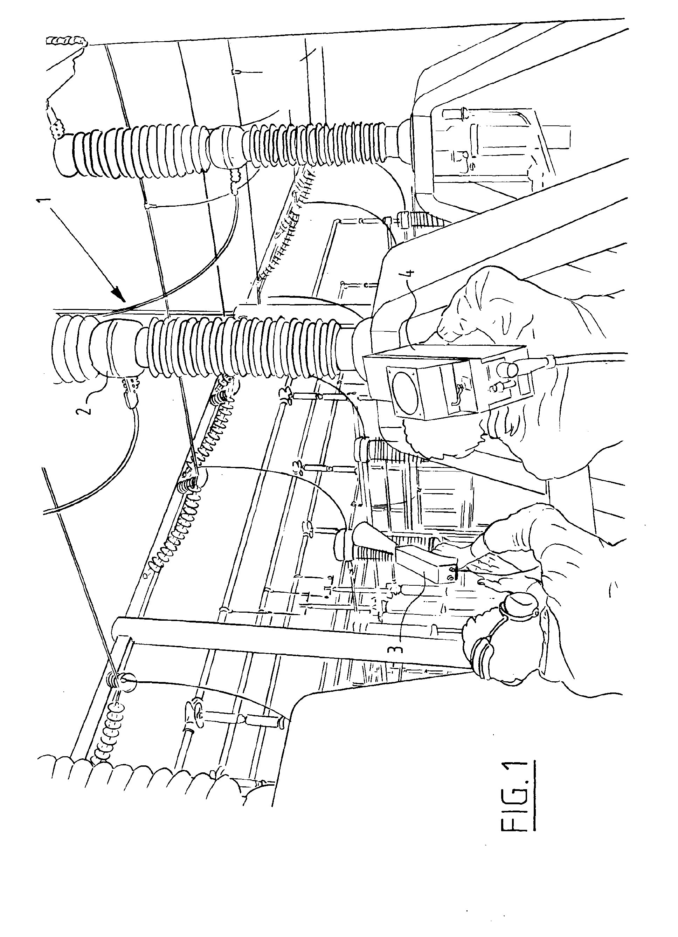

Figure 1 shows a switch 1 provided with a seam 2. It is suspected that switch 1 is leaking SF6. For this purpose a directional microphone 3 is aimed at the relevant location, while a laser light source 4 is aimed at the same seam. It is thus possible to apply the method according to the present invention with a separate directional microphone and a separate energy source.

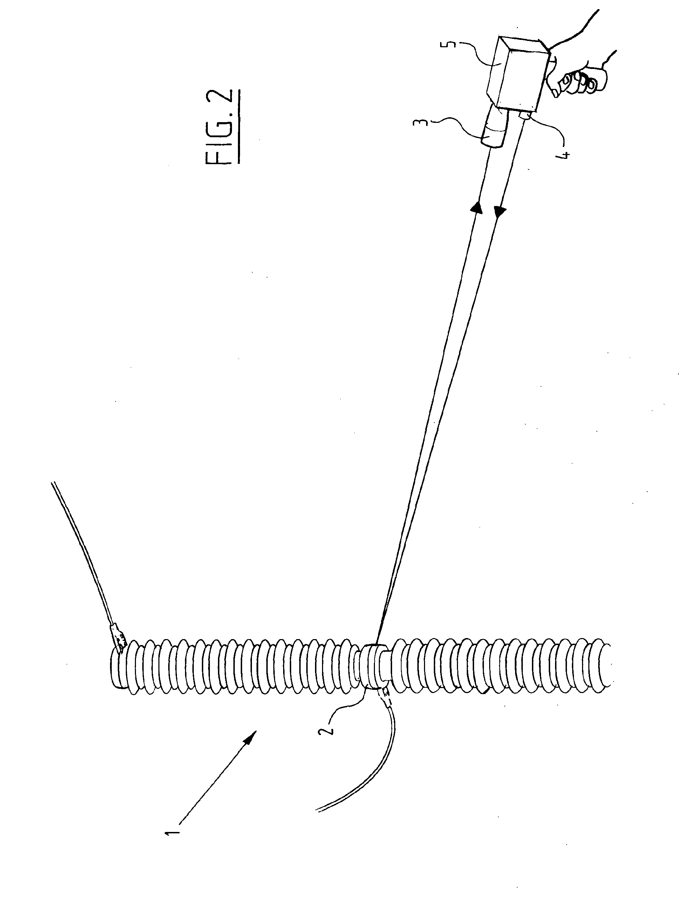

It is however recommended to apply a combined apparatus 5 as shown in figure 2. Microphone 3 and laser source 4 are herein aimed simultaneously at the location 2 of suspected leakage.

## Claims

1. Apparatus for detecting leaks in vessels inside which there prevails a pressure differing from ambient pressure, comprising a hand-operated directional microphone for detecting sound generated in the case of a leak, and display means coupled to the directional microphone for displaying sound picked up by the directional microphone, **characterized in that** the directional microphone is coupled to a radiation energy source for supplying radiation energy to at least a part of the region from which the sounds are detected by the directional microphone, which radiation energy is suitable for increasing the kinetic energy of the gas escaping from the leak.

2. Apparatus as claimed in claim 1, **characterized in that** the radiation energy source is formed by a laser energy source.

3. Apparatus as claimed in claim 1 or 2, **characterized in that** the apparatus is dimensioned for the escape of sulphur hexafluoride from electrical power-cutout switches.

4. Method for detecting leaks in vessels inside which there prevails a pressure differing from ambient pressure, wherein a user aims a directional microphone at a location of suspected leakage in the vessel and the sound picked up by the directional microphone is displayed, **characterized in that** a radiation energy source is aimed at the same location of suspected leakage for supplying thereto a radiation energy with properties for increasing the kinetic energy of the gas escaping from the leak.

5. Method as claimed in claim 4, **characterized in that** aiming of the radiation energy source takes place by aiming the directional microphone.

6. Method as claimed in claim 4 or 5, **characterized in that** the method is used to detect leaks in power-cutout switches filled with sulphur hexafluoride.
